# EUROPÄISCHE PATENTSCHRIFT

(11) **EP 0 494 851 B1**
(45) Veröffentlichungstag und Bekanntmachung des Hinweises auf die Patenterteilung: **17.09.1997**
(21) Anmeldenummer: 92890003.4
(22) Anmeldetag: 09.01.1992
(51) Int. Cl.: D01F 2/00, D01D 5/06, C08J 5/18, C08L 1/02

(54) **Verfahren zur Herstellung eines cellulosischen Formkörpers**
Process for the production of cellulosic articles
Procédé pour la fabrication d'objets cellulosiques

(30) Priorität: 09.01.1991 AT 31/91
(43) Veröffentlichungstag der Anmeldung: 15.07.1992
(73) Patentinhaber: Lenzing Aktiengesellschaft, A-4860 Lenzing (AT)
(72) Erfinder: Jurkovic, Raimund, A-4860 Lenzing (AT); Firgo, Heinrich, A-4840 Vöcklabruck (AT); Eichinger, Dieter, A-4840 Vöcklabruck (AT)
(74) Vertreter: Müllner, Erwin, Dr.

(56) Entgegenhaltungen:
- EP-A- 0 299 824
- US-A- 3 767 756
- US-A- 4 416 698

## Beschreibung

Die vorliegende Erfindung betrifft ein Verfahren zur Herstellung eines cellulosischen Formkörpers, bei dem eine cellulosische Aminoxidlösung durch eine Düse oder einen Spalt gepreßt, anschließend durch einen Luftspalt geführt und schließlich in einem Fällbad koaguliert wird.

Es ist bekannt, daß Fasern mit guten Gebrauchseigenschaften aus Hochpolymeren nur dann erhalten werden, wenn eine "Faserstruktur" erzielt werden kann (Ullmann, 5. Auflage Vol. A10, 456). Unter anderem ist es dazu nötig, mikroorientierte Bereiche im Polymeren, beispielsweise Fibride, in der Faser auszurichten. Diese Orientierung wird vom Herstellungsverfahren bestimmt und beruht auf physikalischen oder physikochemischen Vorgängen. In vielen Fällen bewirkt eine Verstreckung diese Orientierung.

In welchem Verfahrensabschnitt und unter welchen Bedingungen diese Verstreckung erfolgt, ist ausschlaggebend für die erhaltenen Fasereigenschaften. Beim Schmelzspinnen werden die Fasern im warmen plastischen Zustand,während die Moleküle noch beweglich sind, verstreckt.Gelöste Polymere können trocken oder naß gesponnen werden. Beim Trockenspinnen erfolgt die Verstreckung, während das Lösungsmittel entweicht bzw. verdampft; die in ein Fällbad extrudierten Fäden werden während der Koagulierung verstreckt. Verfahren dieser Art sind bekannt und reichlich beschrieben. In all diesen Fällen ist es aber wichtig, daß der Übergang vom flüssigen Zustand (unabhängig, ob Schmelze oder Lösung) zum festen Zustand so erfolgt, daß während der Fadenbildung auch eine Orientierung der Polymerketten oder -kettenpakete (sprich Fibride,Fibrillen usw.) erzielt werden kann.

Um das schlagartige Verdampfen eines Lösungsmittels aus einem Faden während des Trockenspinnens zu verhindern,gibt es mehrere Möglichkeiten.

Die Problematik der sehr raschen Koagulation des Polymeren beim Naßspinnen (wie z. B. im Falle von cellulosischen Aminoxidlösungen) konnte jedoch bisher nur durch Kombination von Trocken- und Naßspinnen gelöst werden.

So ist bekannt, Lösungen von Polymeren über einen Luftspalt in das Koagulationsmedium einzubringen. In der EP-A-295 672 ist die Herstellung von Aramidfasern, die über einen Luftspalt in ein nicht-koagulierendes Medium eingebracht, verstreckt und anschließend koaguliert werden, beschrieben.

Die DD-PS 218 121 hat das Verspinnen von Cellulose in Aminoxiden über einen Luftspalt zum Gegenstand, wobei Vorkehrungen, die das Verkleben verhindern, vorgesehen sind.

Gemäß der US-PS 4 501 886 wird eine Lösung von Cellulose-triacetat mittels eines Luftspaltes gesponnen.

Inder US-PS 3 414 645 ist ebenfalls die Herstellung von aromatischen Polyamiden aus Lösungen in einem Trocken-Naß-Spinnverfahren beschrieben.

Bei all diesen Verfahren wird im Luftspalt eine gewisse Orientierung erzielt, denn alleine das Ausfließenlassen einer zähflüssigen Lösung durch eine kleine Öffnung nach unten zwingt aufgrund der Schwerkraft den Lösungsteilchen eine Orientierung auf. Diese Orientierung durch die Schwerkraft kann noch erhöht werden, wenn die Extrudiergeschwindigkeit der Polymerlösung und die Abzugsgeschwindigkeit des Fadens so eingstellt sind, daß eine Verstreckung erzielt wird.

Ein Verfahren dieser Art ist in der AT-PS 387 792 (bzw. den dazu äquivalenten US-PSen 4 246 221 und 4 416 698) beschrieben. Eine Lösung von Cellulose in NMMO (NMMO = N-Methylmorpholin-N-oxid) und Wasser wird geformt, im Luftspalt verstreckt und anschließend ausgefällt. Die Verstreckung wird bei einem Streckverhältnis von mindestens 3 vorgenommen.

Ein Nachteil dieses Verfahrens ist die mangelnde Flexibilität, die Eigenschaften des Formkörpers verändern zu können. Es ist ein minimales Spinn-Streck-Verhältnis notwendig, um entsprechende textile Daten zu erhalten. Bei sehr geringem Verzug sind nur äußerst bescheidene textile Fasereigenschaften erzielbar, d.h. daß sich beispielsweise bei der Fasererzeugung ein äußerst geringes Arbeitsvermögen (das ist das Produkt aus Faserfestigkeit und Faserdehnung) ergibt. Ein weiterer Nachteil ist, daß der Effekt der sogenannten Abzugs-/Austrittsgeschwindigkeitsresonanz (vgl. Navard, Haudin, "Spinning of a Cellulose N-Methylmorpholine-N-oxide solution",Polymer Process Engineering, 3(3), 291 (1985)), der zu unregelmäßigen Faserdurchmessern führt, umso größer ist, je größer das Spinn-Streck-Verhältnis ist. Schließlich ist auch nachteilig, daß die Formgebung praktisch nur im Luftspalt stattfinden kann. Eine nachträgliche Formgebung ist nur sehr schwer möglich. Dadurch ist die Bandbreite der möglichen Produkte natürlich beschränkt. Wünschenswert wäre eine nachträgliche Beeinflussung der Produkteigenschaften, wodurch dieses Verfahren eine wesentliche Flexibilität erhält.

Es ist Aufgabe der vorliegenden Erfindung, diese Nachteile zu beseitigen.

Diese Aufgabe wird durch ein Verfahren der eingangs genannten Art erfindungsgemäß dadurch gelöst, daß das Verhältnis von Abzugsgeschwindigkeit zu Lochaustrittsgeschwindigkeit höchstens 1 ist und daß der Formkörper nach der Koagulation verstreckt oder tiefgezogen wird.

Erfindungsgemäß ist also die Abzugsgeschwindigkeit kleiner (oder höchstens gleich) der Lochaustrittsgeschwindigkeit der Spinnmasse, sodaß keine Verstreckung auftreten kann; dadurch bleibt die Cellulose bis zur Koagulation im Fällbad in einem relativ unorientierten Zustand. Dies ist günstig, denn je geringer die Orientierung vor bzw.bei der Koagulierung ist, desto größer ist die Möglichkeit der Beeinflussung der Eigenschaften danach. Durch die geringe Orientierung hat die koagulierte (ausgefällte) Cellulose eine Elastizität, die beinahe an Gummi erinnert. Erfindungsgemäß kann nun diese Cellulose verstreckt bzw. tiefgezogen werden, um die gewünschten Eigenschaften zu erhalten; die angestrebte Flexibilität ist dadurch gewährleistet.

Ein weiterer Vorteil besteht darin, daß infolge der nicht mehr vorhandenen Verstreckung der Luftspalt nahezu beliebig kurz gemacht werden kann, sodaß selbst dann, wenn die Spinndüsen eine sehr hohe Lochdichte aufweisen, keine Gefahr besteht, daß benachbarte Fäden verkleben. Da in der Großproduktion die Produktivität durch Erhöhung der Lochdichte entschieden gesteigert werden kann, ist auch dies ein wesentlicher Vorteil der vorliegenden Erfindung.

Anhand der folgenden Beispiele wird die Erfindung näher erläutert.

### BEISPIEL 1: Herstellung einer Faser bei einem Verhältnis von Abzugsgeschwindigkeit zu Lochaustrittsgeschwindigkeit von kleiner 1 (Vergleichsversuch)

Eine 13%ige cellulosische NMMO-Lösung (Zellstoff der Type Viskokraft der Firma ICP, 10 % Wasser, 77 % NMMO, 0,1 % Oxalsäure als Stabilisator) wurde durch eine Düse mit 100 Löchern (Lochdurchmesser jeweils 130 µm) gepreßt. Der Ausstoß war 16,5 g/min; die daraus resultierende Ausstoßgeschwindigkeit betrug 10,35 m/min. Die 100 Fäden wurden durch einen 8 mm langen Luftspalt und dann mit einer Geschwindigkeit von 6 m/min durch ein 15 cm langes Spinnbad (Temperatur: 2°C, NMMO-Konzentration: 5 %) geführt. Das Verhältnis von Abzugs- zu Austrittsgeschwindigkeit betrug also 0,58.

Die daraus resultierende Faser hatte eine Festigkeit von 11,8 cN/tex bei einer Dehnung von 77,5 %. Der Wert für die Dehnung ist extrem hoch; dies beweist, daß die Cellulose in relativ ungeordnetem Zustand vorliegt.

### BEISPIEL 2: Verstreckung der Faser nach der Koagulation in der Luft

Bei diesem Versuch wurde wie im Beispiel 1 vorgegangen. In diesem Fall wurde jedoch die Faser nach dem Spinnbad, d. h. nach der Koagulierung, auf eine Galette mit 6 m/min aufgewickelt und das Fadenbüdel über eine zweite Galette mit einer Geschwindigkeit von 13 m/min geführt. Die Verstreckung betrug daher 117 %. (Unter Verstreckung einer Faser in % wird im Rahmen dieser Anmeldung (Endlänge-Anfangslänge)/Anfangslänge.100 verstanden.) Die daraus resultierenden Fasern hatten eine Festigkeit von 22,4 cN/tex bei einer Dehnung von 15,3 %.

### BEISPIEL 3: Verstreckung der Faser nach der Koagulation in Wasser

Dabei wurde die Faser wiederum wie in Beispiel 1 durch ein Spinnbad mit 6 m/min geführt (Abzugs-/Austrittsgeschwindigkeit: 0,58) und anschließend durch ein 80 cm langes Verstreckbad mit Wasser (Temperatur: 77°C) geführt. Die zweite Galette wurde mit zwei verschiedenen Geschwindigkeiten v betrieben. Die erhaltenen Fasern hatten folgende Eigenschaften:

| v m/min | Verstreckung % | Titer dtex | Festigkeit kond. cN/tex | Dehnung kond. % |
|---|---|---|---|---|
| 14 | 133 | 32,4 | 19,7 | 17,5 |
| 21 | 250 | 10,3 | 22,3 | 9,2 |

### BEISPIEL 4: Herstellung einer Faser bei einem Verhältnis von Abzugsgeschwindigkeit zu Lochaustrittsgeschwindigkeit von größer 1 (Vergleichsversuch)

Eine 13%ige cellulosische NMMO-Lösung (Zellstoff der Type Visokraft der Firma ICP, 10 % Wasser, 77 % NMMO, 0,1 % Oxalsäure als Stabilisator)wurde durch eine Düse mit 100 Löchern (Lochdurchmesser jeweils 70 µm) gepreßt. Die Fördermenge betrug 5,1 g/min, das entspricht einer Austrittsgeschwindigkeit von 11,1 m/min. Die Abzugsgeschwindigkeit der ersten Galette war 33,3 m/min, d. h. das Verhältnis von Abzugs- zu Austrittsgeschwindigkeit war 3,0. Mit der Geschwindigkeit der Galette 1 wurden die Fäden durch ein Spinnbad geführt, dessen Temperatur 33°C und dessen NMMO-Konzentration 10 % betrug. Das anschließende Verstreckbad hatte eine Temperatur von 79°C und eine NMMO-Konzenvon 9 %. Die zweite Galette nach dem Verstreckbad hatte eine Abzugsgeschwindigkeit von 46,9 m/min, d. h. die Verstreckung betrug 41 %.

Die textilen Eigenschaften der erhaltenen Faser waren:
Titer: 3,5 dtex
Festigkeit konditioniert: 25 cN/tex
Dehnung konditioniert: 8,8 %

Die Fasern sind bei einem Verhältnis von Abzugsgeschwindigkeit zu Lochaustrittsgeschwindigkeit von größer 1 prinzipiell auch noch verstreckbar jedoch nicht mehr in jenem Ausmaß, wie in den Beispielen 2 bis 4 dokumentiert.

### BEISPIEL 5: Herstellung einer Folie

Eine 9%ige cellulosische NMMO-Lösung (Zellstoff der Type Buckeye V5 der Firma Procter & Gamble, 12 % Wasser, 79 % NMMO, 0,1 % Oxalsäure als Stabilisator) wurde durch eine Schlitzdüse (Spalt: 50 µm; Länge: 30 mm) gepreßt. Der Ausstoß betrug 21,3 g/min, was einer Austrittsgeschwindigkeit von 11,7 m/min entspricht. Die extrudierte Lösung wurde durch einen 7 mm langen Luftspalt und daran anschließend durch ein 15 cm langes Spinnbad (Temperatur: 24°C; NMMO-Konzentration: 20 %) mittels einer ersten Galette mit einer Geschwindigkeit von 6 m/min abgezogen. Das Verhältnis von Abzugs- zu Austrittsgeschwindigkeit betrug also 0,51. Im selben Arbeitsgang wurde die Folie durch ein 80 cm langes Verstreckbad (Temperatur: 90°C; Konzentration: 20 %) geführt und mit einer zweiten Galette (Geschwindigkeit: 11 m/min) verstreckt. Die Verstreckung betrug somit 83 %. Die Eigenschaften der gewaschenen und getrockneten Folie betrugen: Dicke: 10 µm; Festigkeit: 200 N/mm²; Dehnung: 6,5 %.

### BEISPIEL 6: Herstellung eines Formkörpers

Es wurde eine Folie wie in Beispiel 5 hergestellt, jedoch nicht verstreckt, d.h. nach der ersten Galette wurde die Folie entnommen. Sie wurde im unverstreckten Zustand mit einem Glasstab 3 mm tiefgezogen, gewaschen und getrocknet, wodurch sich ein stabiler Formkörper ergab.

## Patentansprüche

1. Verfahren zur Herstellung eines cellulosischen Formkörpers, bei dem eine cellulosische Aminoxidlösung durch eine Düse oder einen Spalt gepreßt, anschließend durch einen Luftspalt geführt und schließlich in einem Fällbad koaguliert wird, dadurch gekennzeichnet, daß das Verhältnis von Abzugsgeschwindigkeit zu Lochaustrittsgeschwindigkeit höchstens 1 ist und daß der Formkörper nach der Koagulation verstreckt oder tiefgezogen wird.

## Claims

1. Process for the production of a cellulosic moulding, in which a cellulosic amine oxide solution is forced through a nozzle or a gap, then passed through an air gap and finally coagulated in a precipitation bath, characterized in that the ratio of take-off speed to speed of emergence from the hole is not more than 1 and that the moulding is stretched or deep-drawn after coagulation.

## Revendications

1. Procédé pour la fabrication d'un corps moulé cellulosique, dans lequel on refoule sous pression une solution cellulosique aminoxyde à travers une tuyère ou une fente, on la fait passer ensuite dans un intervalle d'air et enfin on la coagule dans un bain de précipitation, caractérisé en ce que le rapport entre la vitesse d'extraction et la vitesse de sortie de l'étranglement (du trou) est au plus de 1, et en ce que l'on soumet le corps moulé après la coagulation à un étirage ou à un emboutissage profond.
